# EUROPEAN PATENT APPLICATION

(11) **EP 3 553 342 A1**
(43) Date of publication of application: **16.10.2019**
(21) Application number: 18166514.2
(22) Date of filing: 10.04.2018
(51) Int. Cl.: F16H 25/20, G01L 5/00

(54) **ACTUATING CYLINDER WITH LOAD SENSOR**

(71) Applicant: SKF Motion Technologies AB, 51550 Gothenburg (SE)
(72) Inventor: Benoit, Laurent, 73800 La Chavanne (FR)
(74) Representative: Heyerhoff Geiger & Partner Patentanwälte PartGmbB

(57) **Abstract**

The invention relates to an actuating cylinder (10) comprising a housing (12) with a main body (12-1) and a front cover (12-2); an actuation rod (14) mounted to be movable longitudinally relative to the housing (12); an electric motor (16) provided with a stator (20) and with a rotating rotor shaft (24); a screw mechanism (18) including a screw (40) connected to the actuation rod (14), the rotor shaft (24) being disposed around the screw (40), and a plurality of rolling elements (42), the rotational movement of the rotor shaft (24) being converted into a linear movement in translation of the screw (40) and of the actuation rod (14); and at least one bearing (30, 32) for guiding in rotation and supporting the rotor shaft (24) with respect to the main body (12-1) of housing (12). A load path ring (50) has an outer ring portion (52) in axial abutment against a fixed part (30-1) of the at least one bearing (30), and an inner ring portion (54) connected internally to said outer ring portion (52). A load sensor (60) is axially clamped between the front cover (12-2) and the inner ring portion (54) of the load path ring (50).

## Description

### TECHNICAL FIELD OF THE I NVENTI ON

The invention relates to the field of actuating cylinders, in particular the field of compact electromechanical cylinders with integrated electric motor.

### BACKGROUND OF THE INVENTION

An electromechanical actuating cylinder generally comprises a housing, an actuation rod mounted so as to be movable longitudinally relative to the housing, an electric motor having a stator and a rotor shaft, a mechanism for converting the rotational movement of the rotor shaft of the motor into a linear movement in translation of the actuation rod, and at least one bearing for guiding in rotation and supporting the rotor shaft with respect to the housing.

Such mechanism can be a screw mechanism including a screw provided with an external thread, a nut disposed around the screw and having an internal thread, and a plurality of rolling elements engaged with the internal and external threads. Said elements can be rollers and the mechanism is of roller screw type, or balls and the mechanism is of ball screw type.

In the case of inverted planetary screw mechanism, the nut is driven in rotational movement by the rotor of the electric motor, the screw having then a translating movement by the intermediate of the rolling elements. Said screw is connected to the rod. In order to guide in rotation and support the nut, the electromechanical cylinder further comprises bearings arranged between the nut and the housing. The nut is advantageously a rotor shaft or connected to the rotor shaft.

It is known to use sensing devices in assemblies comprising moving parts in order to analyse, control and survey key parameters of said parts. Sensing devices, in particular load sensors, are powered by external power supply means and data are transmitted to control means. The knowledge of the level and variations of such parameters allows quantifying the assembly efficiency, the wear and degradation of parts and ensuring a better management of preventive maintenance.

Load sensor has to be installed between mounting surfaces and then is located at specific force transmission paths.

However, it is highly complex to integrate a load sensor within an electromechanical actuating cylinder. The constituting parts are all in rotation and/or translation movement which are not suitable for the integration of sensing device cables used for powering and data transfer.

A well-known solution is the integration of a load sensor between the housing and a fixed part of a bearing that support the rotor shaft. However, the dimension of the load sensor is directly linked to the bearing dimension and the load sensor may not be adapted for some applications.

Another solution is to integrate the load sensor in a push tube connected to a rod end, as disclosed in EP-A1-1 587 205. However, the wire connected to the load sensor is moving with the push tube displacement, and the parts of actuating cylinder require specific and complex designs.

### SUMMARY OF THE INVENTION

The aim of the invention is to solve the above difficulties.

To this end, the invention relates to an actuating cylinder comprising a housing having a main body, a front cover; an actuation rod extending through a cover bore of the front cover and mounted to be movable longitudinally relative to the housing; an electric motor provided with a stator and with a rotating rotor shaft; a screw mechanism including a screw provided with an external thread and connected to the actuation rod, the rotor shaft being disposed around the screw and having an internal thread, and a plurality of rolling elements engaged with the internal and external threads, the rotational movement of the rotor shaft being converted into a linear movement in translation of the screw and of the actuation rod; and comprises at least one bearing for guiding in rotation and supporting the rotor shaft with respect to the main body of housing.

According to the invention, the actuating cylinder further comprises a load path ring having an outer ring portion fixed in main body of housing and in axial abutment against a fixed part of the at least one bearing, and an inner ring portion connected internally to said outer ring portion. The actuating cylinder also comprises a load sensor axially clamped and preloaded between the front cover and the inner ring portion of the load path ring.

According to further aspects of the invention which are advantageous but not compulsory, such an actuating may incorporate one or several of the following features:
- The actuating cylinder comprises at least two axially adjacent bearings.
- The at least one bearing is a rolling bearing having a fixed outer ring fixed in a bore of the main body of housing, a rotating inner ring fixed to an outer surface of the rotor shaft, and at least one row of rolling elements between the rings.
- The rolling elements of ball bearing are balls.
- The at least two adjacent bearings are oblique ball bearings.
- The rolling elements of screw mechanism are rollers having each an external thread which is engaged in the external and internal threads of the screw and the rotor shaft, respectively.
- The rolling elements of screw mechanism are balls engaged in external and internal threads of screw and rotor shaft, respectively.
- The housing comprises a rear cover.
- The main body of housing comprises a stepped bore with an inwardly projecting shoulder, the fixed part of the at least one bearing being axially clamped between the outer ring portion and the said shoulder.
- The outer ring portion is an axial tube having a bore through which the actuation rod extends.
- The inner ring portion extends inwardly radially from an axial side of outer ring portion, said inner ring portion having a bore through which the actuation rod extends.
- The load path ring is formed integral.
- The front cover comprises a radial cover portion provided with the cover bore through which the actuation rod extends, the load sensor being in axial abutment against the said radial cover portion.
- The front cover comprises an axial cover flange directed axially towards the main body of housing and securely fixed to the main body of housing.
- The front cover is formed integral.
- The radial cover portion comprises a recess wherein the load sensor is arranged.
- The inner ring portion comprises a recess wherein the load sensor is arranged.

### BRIEF DESCRIPTION OF THE DRAWINGS

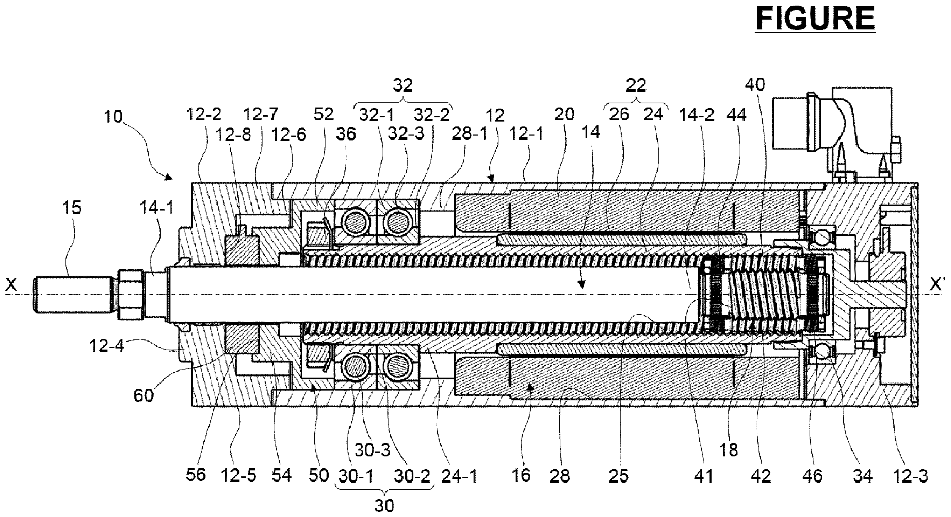

The invention will now be explained in correspondence with the annexed figure, as illustrative example, without restricting the object of the invention. The Figure is an axial sectional view of an electromechanical actuating cylinder in accordance with the present invention.

### DETAILED DESCRIPTION OF SOME EMBODIMENTS

In the Figure, a compact electromechanical actuating cylinder, referenced 10 as a whole, extends along a longitudinal axis X-X'. The actuating cylinder 10 comprises a housing 12, an actuation rod 14 movable axially and coaxially to the axis X-X', a push tube 15 connected to a first end 14-1 of the actuation rod, an electric motor 16, and an inverted planetary roller screw mechanism 18 disposed inside the housing 12. The screw mechanism 18 is disposed radially between the electric motor 16 and the actuation rod 14.

The mechanism 18 allows the conversion of rotation movement of the electric motor 16 into a linear movement in translation of the actuation rod 14 along the axis X-X'. The electric motor 16 and the screw mechanism 18 are housed entirely within the housing 12. The actuation rod 14 extends through the housing 12 and protrudes axially to the outside.

In the illustrated exemplary embodiment, the housing 12 comprises a tubular main body 12-1 having a bore 28, a front cover 12-2 and a rear cover 12-3, said covers being each fixed at one end of the main body 12-1.

The front cover 12-2 comprises a radial cover portion 12-4 having a bore through which the actuation rod 14 extends, and an axial cover flange 12-5 that axially extends from an outer edge of said radial cover portion 12-4 towards the main body 12-1. The axial cover flange 12-5 is advantageously stepped, a portion of smaller diameter 12-6 of said flange 12-5 being arranged in the bore 28 of main body 12-1, and another portion of higher diameter 12-7 of said flange 12-5 forming an outwardly radially projecting shoulder in axial abutment against the main body 12-1.

Advantageously, the flange 12-5 of front cover 12-2 is securely fixed to the main body 12-1. For example, the portion of lower diameter 12-6 comprises an outer thread and the bore 28 comprises a portion with inner thread, said portion 12-6 being screwed in bore 28. Alternatively, the front cover 12-2 may be fixed by welding, screws, or any other suitable fixing means to the main body 12-1.

The front cover 12-1 is advantageously formed integral.

The electric motor 16 comprises a stator 20 fixed on the housing 12, and a rotor 22. The stator 20 is fixed in the bore 28 of main body 12-1 of housing 12. The bore 28 is advantageously stepped and comprises an inwardly radially projecting shoulder 28-1, the stator being in axial abutment against said shoulder 28-1 towards a front axial direction. The rotor 22 is provided with a tubular rotor shaft 24 and a plurality of permanent magnets 26 supported by said shaft 24.

The rotor shaft 24 extends axially on either side of the stator 20. The electric motor 16 can be of the brushless type, or alternatively of any other suitable type.

In order to guide in rotation and support the rotor shaft 24 with respect to the housing 12, the actuating cylinder 10 also comprises two front rolling bearings 30, 32 and one rear rolling bearing 34. In the illustrated exemplary embodiment, the bearings 30, 32, 34 are each of ball type. Alternatively, the bearing may be of any other suitable types, for example with tapered rollers or cylindrical rollers.

The rear rolling bearing 34 is mounted in the rear cover 12-3 of housing 12.

The front rolling bearings 30, 32 are axially adjacent one to another and comprise each a fixed outer ring 30-1, 32-1, a rotating inner ring 30-2, 32-2, and a row of balls 30-3, 32-3, respectively.

The fixed outer rings 30-1, 32-1 of bearings 30, 32 are fixed in the stepped bore 28 of main body 12-1 of housing 12. The fixed inner ring 32-1 of bearing 32 is in axial abutment against the shoulder 28-1 towards a rear axial direction. The fixed outer rings 30-1, 32-1 comprise each a bore with an outer raceway having, in cross-section, a concave inner profile adapted to the balls 30-3, 32-3, respectively. The rotating inner rings 30-2, 32-2 of bearings 30, 32 are fixed to an outer surface of rotor shaft 24, said rings being axially clamped between an outwardly radially projecting shoulder 24-1 provided on outer surface of rotor shaft 24, and a fixing ring 36 fixed to said rotor shaft 24. The rotating inner rings 30-2, 32-2 comprise each an outer surface with an inner raceway having, in cross-section, a concave inner profile adapted to the balls 30-3, 32-3, respectively.

The front rolling bearings 30, 32 are advantageously oblique in an O-shaped configuration to support loads in both axial directions. Alternatively, the front rolling bearings may be in an X-shaped configuration.

The push tube 15 is annular and comprises a portion with an outer thread that is screwed in an inner thread provided to a bore portion of the first end 14-1 of actuation rod 14.

The inverted planetary roller screw mechanism 18 comprises a screw 40, which is coaxial and connected to a second end 14-2 of the actuation rod 14. The push tube 15 and the screw 40 are axially opposite one to another with respect to the actuation rod 14.

The rotor shaft 24 is of tubular shape, coaxial with the screw 40 and is disposed around said screw 40. The screw 40 comprises an external thread 41, and the rotor shaft 24 comprises an internal thread 25 of which the inner diameter is greater than the outer diameter of the external thread 41 of screw 40.

The screw mechanism 18 further comprises a plurality of rollers 42 having each an external thread (not referenced) which is engaged in the external and internal threads 41, 25 of the screw 40 and the rotor shaft 24, respectively. The rollers 42 are identical to one another and are distributed uniformly around the screw 40. Each roller 42 extends along an axis parallel to the screw axis. As is known per se, each roller 42 comprises, at each end (not referenced), an outer toothing engaged with a synchronization toothing of the screw, and a journal extending axially to the outside from the toothing and housed in a recess in one of the spacer rings 44, 46 mounted around said screw 40.

As an alternate not shown, the rolling elements are balls engaged in external and internal threads of screw and rotor shaft, respectively.

The actuation rod 14 is connected to the screw 40 of the screw mechanism 18. The rotation of the rotor shaft 24 of the electric motor 16 is converted into a translation of the screw 40 and of the actuation rod 14 along the axis X-X'.

According to the invention, the actuating cylinder 10 further comprises a load path ring 50.

The load path ring 50 is provided with an outer ring portion 52 formed as an axial tube. The outer ring portion 52 comprises a bore through which the actuation rod 14 extends. The outer ring portion 52 is fixed in the bore 28 of the main body 12-1 of housing 12. The outer ring portion 52 is in axial abutment against the fixed outer ring 30-1 of the rolling bearing 30 on the rear axial side of ring. The outer ring portion 52 is axially facing the portion of smaller diameter 12-6 of flange 12-5 of front cover 12 on the front axial side of ring, an axial gap being defined between them.

The load path ring 50 is further provided with an inner ring portion 54 that is connected internally to said outer ring portion 52. The inner ring portion 54 extends inwardly radially from a front axial side of outer ring portion 52. The inner ring portion 52 has a bore through which the actuation rod 14 extends.

The load path ring 52 is advantageously formed integral.

The actuating cylinder 10 also comprises a load sensor 60 having a bore through which the actuation rod 14 extends. The load sensor 60 is in axial abutment against the radial cover portion 12-4 of front cover 12-1 on the front axial side of sensor. The load sensor 60 is in axial abutment against the inner ring portion 54 of the load path ring 50 on the rear axial side of sensor.

The load sensor 60 is then mounted axially preloaded between the load path ring 50 and the font cover 12-2. One can calibrate a reference preload value when the actuating cylinder is not loaded.

Advantageously, the radial cover portion 12-4 and the inner ring portion 52 comprise each a recess 12-8 and 56, respectively, wherein the load sensor 60 is arranged. The load sensor 60 is then axially and radially securely maintained between the front cover 12-2 and the load path ring 50.

The load sensor 60 provided to the actuating cylinder 10 works as followed:
When the push tube 15 is in axial compression load, the load is exerted from the front axial side towards the rear axial side of the actuating cylinder 10. The load is transmitted from the push tube 15 successively to the actuation rod 14, the screw 40, the rollers 42, the rotor shaft 24, the ring 36, the rotating inner ring 30-2, the balls 30-3, the fixed outer ring 30-1, the fixed outer ring 32-1, the shoulder 28-1 and then the main body 12-1 of housing 12. The preload value on load sensor 60 decreases accordingly with the axial compression load. The load sensor 60 can sense this load difference, and then process and transmit a load measurement.

On the contrary, when the push tube 15 is in axial traction load, the load is exerted from the rear axial side towards the from axial side of the actuating cylinder 10. The load is transmitted from the push tube 15 successively to the actuation rod 14, the screw 40, the rollers 42, the rotor shaft 24, the shoulder 24-1, the rotating inner ring 32-2, the balls 32-3, the fixed outer ring 32-1, the fixed outer ring 30-1, the outer ring portion 52, the inner ring portion 54 and then the load sensor 60 that is pressed against the fixed front cover 12-2. The load sensor 60 is loaded, and the preload value on load sensor 60 increases accordingly with the axial traction load. The load sensor 60 can sense this load difference, and then process and transmit a load measurement.

Thanks to the invention, the load sensor 60 can sense the compression and traction axial loads exerted on the push tube 15, and then to the actuation cylinder 10 in service.

The load sensor 60 is integrated in the fixed cover 12-2 of housing 12, and then the load sensor 60 is fixed. The load sensor 60 can be easily wired, the other parts of the actuating cylinder 10 being not impacted by the load sensor integration.

Another advantage is that the actuating cylinder axial dimension is not dramatically increased to integrate the load sensor 60. The load sensor 60 can be arranged in a front cover 12-2 of standard dimensions, only the internal design of said cover being modified to receive the said load sensor.

Representative, non-limiting examples of the present invention were described above in details with reference to the attached drawings. This detailed description is merely intended to teach a person of skill in the art further details for practicing preferred aspects of the present teachings and is not intended to limit the scope of the invention. Furthermore, each of the additional features and teachings disclosed above may be utilized separately or in conjunction with other features and teachings to provide improved actuating cylinder.

Moreover, various features of the above-described representative examples, as well as the various independent and dependant claims below, may be combined in ways that are not specifically and explicitly enumerated in order to provide additional useful embodiments of the present teachings.

## Claims

1. Actuating cylinder (10) comprising:
- a housing (12) having a main body (12-1), and a front cover (12-2);
- an actuation rod (14) extending through a cover bore of the front cover (12-2) and mounted to be movable longitudinally relative to the housing (12);
- an electric motor (16) provided with a stator (20) and with a rotating rotor shaft (24);
- a screw mechanism (18) including a screw (40) provided with an external thread (41) and connected to the actuation rod (14), the rotor shaft (24) being disposed around the screw (40) and having an internal thread (25), and a plurality of rolling elements (42) engaged with the internal and external threads (41, 25), the rotational movement of the rotor shaft (24) being converted into a linear movement in translation of the screw (40) and of the actuation rod (14); and
- at least one bearing (30, 32) for guiding in rotation and supporting the rotor shaft (24) with respect to the main body (12-1) of housing (12);
**characterized in that** the actuating cylinder (10) further comprises:
- a load path ring (50) having an outer ring portion (52) fixed in the main body (12-1) of housing and in axial abutment against a fixed part (30-1) of the at least one bearing (30), and an inner ring portion (54) connected internally to said outer ring portion (52); and
- a load sensor (60) axially clamped and preloaded between the front cover (12-2) and the inner ring portion (54) of the load path ring (50).

2. Actuating cylinder according to the claim 1, wherein the at least one bearing is a rolling bearing (30, 32) having a fixed outer ring (30-1, 32-1) fixed in a bore (28) of the main body (12-1) of housing (12), a rotating inner ring (30-2, 32-2) fixed to an outer surface of the rotor shaft (24), and at least one row of rolling elements (30-3, 32-3) between the rings (30-1, 30-2; 32-1, 32-2).

3. Actuating cylinder according to the claim 2, wherein the rolling elements are balls (30-3, 32-3), the actuating cylinder (10) comprising at least two adjacent oblique bearings (30, 32).

4. Actuating cylinder according to any of the preceding claims, wherein the main body (12-1) of housing (12) comprises a stepped bore (28) with an inwardly projecting shoulder (28-1), the fixed part of the at least one bearing (30, 32) being axially clamped between the outer ring portion (52) of load path ring (50) and the said shoulder (28-1).

5. Actuating cylinder according to any of the preceding claims, wherein the outer ring portion (52) of load path ring (50) is an axial tube having a bore through which the actuation rod (14) extends.

6. Actuating cylinder according to the claim 5, wherein the inner ring portion (54) extends inwardly radially from an axial side of outer ring portion (52), said inner ring portion (54) having a bore through which the actuation rod (14) extends.

7. Actuating cylinder according to any of the preceding claims, wherein the front cover (12-1) comprises a radial cover portion (12-4) provided with the cover bore through which the actuation rod (14) extends, the load sensor (60) being in axial abutment against the said radial cover portion (12-4).

8. Actuating cylinder according to the claim 7, wherein the radial cover portion (12-4) comprises a recess (12-8) wherein the load sensor (60) is arranged.

9. Actuating cylinder according to any of the preceding claims, wherein the front cover (12-2) comprises an axial cover flange (12-5) directed axially towards the main body (12-1) of housing (12) and securely fixed to the main body (12-1).

10. Actuating cylinder according to any of the preceding claims, wherein the front cover (12-2) is formed integral.

11. Actuating cylinder according to any of the preceding claims, wherein the housing (12) comprises a rear cover (12-3).

12. Actuating cylinder according to any of the preceding claims, wherein the inner ring portion (54) comprises a recess (56) wherein the load sensor (60) is arranged.

13. Actuating cylinder according to any of the preceding claims, wherein the rolling elements of screw mechanism (18) are rollers (42) having each an external thread which is engaged in the external and internal threads (41; 25) of the screw (40) and the rotor shaft (24), respectively.

14. Actuating cylinder according to any of the preceding claims, wherein the rolling elements of screw mechanism (18) are balls engaged in external and internal threads (41; 25) of screw (40) and rotor shaft (24), respectively.
